# EUROPÄISCHE PATENTSCHRIFT

(11) **EP 0 715 091 B1**
(45) Veröffentlichungstag und Bekanntmachung des Hinweises auf die Patenterteilung: **10.07.2002**
(21) Anmeldenummer: 95118407.6
(22) Anmeldetag: 23.11.1995
(51) Int. Cl.: B60G 17/08, F16F 9/44, F16F 9/46, F16F 9/32

(54) **Schwingungsdämpfer mit einstellbarer Dämpfkraft**
Adjustable vibration damper
Amortisseur de vibrations réglable

(30) Priorität: 03.12.1994 DE 4443109; 14.11.1995 DE 19542293
(43) Veröffentlichungstag der Anmeldung: 05.06.1996
(60) Teilanmeldung: 01104011.0
(73) Patentinhaber: ZF Sachs AG, 97424 Schweinfurt (DE)
(72) Erfinder: Rottenberger, Theo, Dipl.-Ing., D-97705 Burkaroth-Gefäll (DE)

(56) Entgegenhaltungen:
- EP-A- 0 601 982
- WO-A-94/12360
- DE-A- 2 113 948
- DE-A- 2 242 990
- DE-A- 3 914 297
- DE-A- 4 041 829
- DE-U- 9 108 291
- FR-A- 2 418 390
- US-A- 1 967 169
- US-A- 4 936 424
- US-A- 4 958 706

## Beschreibung

Die Erfindung betrifft einen Schwingungsdämpfer mit einstellbarer Dämpfkraft entsprechend dem Oberbegriff von Patentanspruch 1.

Bei einem aus der DE-PS 39 14 297 bekannten Schwingungsdämpfer wird über eine mechanische oder sonstige Einstellvorrichtung die Vorspannung eines Federscheibenpakets verändert, das die Dämpfung im Schwingungsdämpfer bewirkt. Der Einfluß auf die Dämpfkraftkennlinie beschränkt sich jedoch auf einen relativ kleinen Bereich, der für höchste Ansprüche, wie sie beispielsweise für den Rennsport gelten, nicht ausreichend ist.

Aus der WO 94/12360 A und der EP 0 601 982 A ist ein Schwingungsdämpfer mit einstellbarer Dämpfkraft bekannt, umfassend einen Zylinder, in dem ein Kolben mit einer Kolbenstange axial beweglich geführt ist, wobei der Kolben den Zylinder in einen ersten und einen zweiten Arbeitsraum unterteilt, mindestens ein Dämpfventil, das in einer Strömungsverbindung zwischen den beiden Arbeitsräumen angeordnet ist und über außenliegende Stellmittel in seiner Dämpfkraftkennlinie beeinflußbar ist, wobei das Dämpfventil aus Einzelventilen besteht, deren Wirkung sich überlagern, wobei ein ersten Einzelventil aus einer Drossel geringen Querschnitts besteht und ein zweites Einzelventil mindestens eine unter einer Federbelastung stehende Ventilscheibe umfaßt und das erste und das zweite Einzelventile über die Stellmittel in ihrer Wirkung einzeln einstellbar sind.

Ein grundsätzliches Problem bei den verstellbaren Schwingungsdämpfer liegt darin, daß sich die Anwendung auf eine relativ kleine Gesamtzahl von relativ vielen verschiedenen Fahrzeugen beschränkt. Damit ist ein erheblicher Kostenfaktor für die Herstellung verbunden, denn es ist aus Bauraumgegebenheiten unmöglich einen Standarddämpfer für sämtliche Fahrzeuge bereitzustellen.

Aufgabe der vorliegenden Erfindung ist es, einen Schwingungsdämpfer zu realisieren, dessen Dämpfkraftkennlinie durch außerhalb des Schwingungsdämpfers befindliche Stellmittel sehr variabel gestaltet werden kann, wobei Anpassungsmöglichkeiten am Schwingungsdämpfer hinsichtlich der Bauraumgegebenheiten berücksichtigt werden sollen.

Erfindungsgemäß wird die Aufgabe durch die Merkmale des Patentanspruchs 1 gelöst.
Es besteht die größtmögliche Variabilität bei der Kennliniengestaltung. Im Gegensatz zum Stand der Technik kann jeder einzelne Kennlinienbereich, der niedrigen oder höheren Arbeitsdrücken zuzuordnen ist, einzeln gestaltet werden. Auch der bei höheren Strömungsgeschwindigkeiten im Schwingungsdämpfer auftretende Kennlinienteil kann in seiner Progressivität den Wünschen angepaßt werden.

Entsprechend einem weiteren vorteilhaften Merkmal sind für die Zug- und Druckrichtung hinsichtlich des zweiten Einzelventils und der weiteren Einzelventile jeweils getrennte Dämpfventile vorgesehen. Daraus folgt, daß auch für die Zug- und Druckrichtung nochmals eine Funktionstrennung der Stellmöglichkeiten vorliegt.

Soll aus bestimmten Gründen eine Kennlinie des ersten Einzelventils für die Zugund Druckrichtung nicht identisch sein, so sind für die Zug- und Druckrichtung jeweils getrennte erste Einzelventile vorgesehen sind, die mit Rückschlagventilen in Wirkverbindung stehen.

Nach einem vorteilhaften Unteranspruch ist die Drossel des ersten Einzelventils über eine Stellnadel einstellbar. Ein konische Nadelspitze sorgt für eine hohe Einstellgenauigkeit. In weiterer Ausgestaltung ist die Drossel des ersten Einzelventils mit einem federbelasteten Schließkörper versehen. Dabei ist die Federvorspannung mindestens einer auf einen Ventilkörper wirksamen Feder einstellbar. Das weitere Einzelventil weist eine den Durchlaßquerschnitt veränderbare Stellschraube auf. Jede Einstellung wirkt unmittelbar auf das Ventil, so daß Übersetzungen und daraus folgende Übertragungsfehler vermieden werden.

Es besteht die Möglichkeit, daß der Kolben über mindestens eine gedrosselte Fluidenverbindung zwischen den Arbeitsräumen verfügt, so daß eine Druckbegrenzungswirkung genutzt werden kann, die bei einer Fehleinstellung vor ungewollten Dämpfkraftspitzen des Schwingungsdämpfers schützt.

Es ist vorgesehen, daß der Schwingungsdämpfer als ein Einrohrdämpfer aufgebaut ist, in dessen Zylinder mittels eines Trennkolbens ein gasgefüllter Ausgleichsraum ausgeführt ist, wobei ein Anschlag eine Hubbegrenzung für den Trennkolben bildet. Der Anschlag verhindert, daß die Anschlußöffnung des dem Ausgleichsraum benachbarten Arbeitsraums vom Trennkolben überfahren wird und der Trennkolben seine Wirkung verliert.

Anhand der folgenden Figurenbeschreibung soll die Erfindung näher erläutert werden. Es zeigt:
- Fig. 1: Schwingungsdämpfer mit zwei außenliegenden Ventilen
- Fig. 2: Nicht erfindungsgemäßes Ausführungsbeispiel eines Schwingungsdämpfer nach dem Oberbegriff des Anspruchs 1.

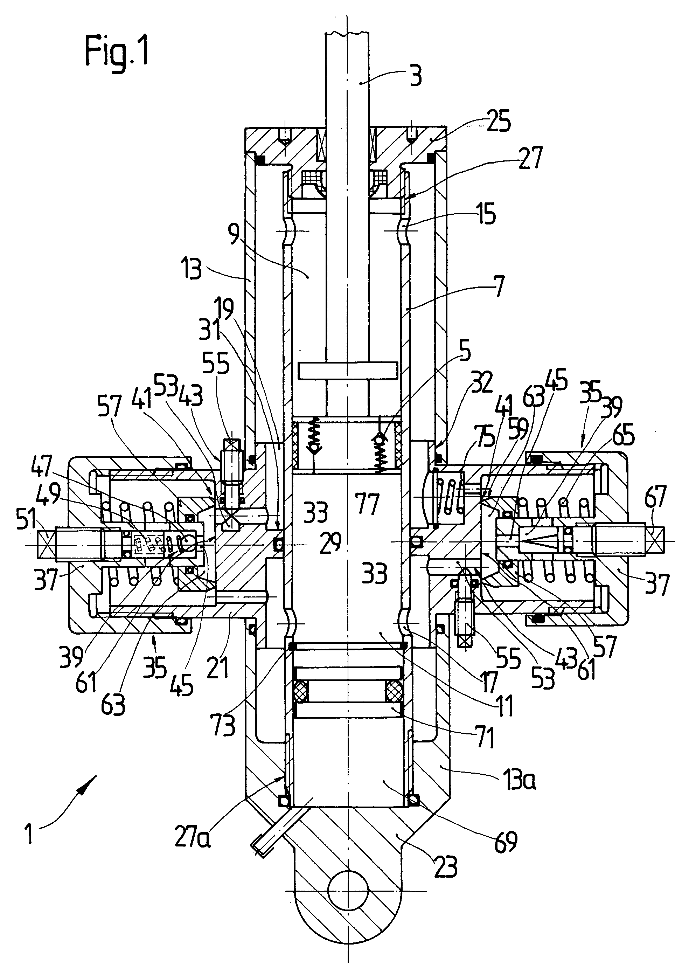

Die Figur 1 zeigt einen Schwingungsdämpfer 1, bei dem eine Kolbenstange 3 mit einem Kolben 5 innerhalb eines Zylinders 7 axial beweglich geführt ist. Der Kolben trennt den Zylinder in einen oberen und einen unteren Arbeitsraum 9;11. Ein Behälterrohr 13; 13a hüllt den Zylinder 7 ein, wodurch ein Ringraum entsteht, der über Anschlußöffnungen 15;17 eine Fluidenverbindung 19 zu einem Ventilblock 21 schafft. Das Behälterrohr ist zweiteilig ausgeführt und erstreckt sich oberhalb und unterhalb des Ventilblocks. Ein Boden 23 als Bestandteil des unteren Behälterrohrteils verschließt den Zylinder. An der Kolbenstangenaustrittsseite ist ein Deckel 25 über eine Gewindeverbindung 27 wiederverschließbar mit dem Zylinder 7 verbunden. Der Ventilblock 21 zentriert sich über eine Mittenöffnung 29 am Zylinder, wobei die Mittenöffnung von einem umlaufenden abgedichteten Steg 31 gebildet wird. Oberhalb und unterhalb in den jeweiligen Endlagen des Kolbens 5 sind die Anschlußöffnungen 15; 17 angeordnet, so daß Dämpfventile innerhalb des Ventilblocks über radial verlaufende Kanäle 33 und die Fluidenverbindung 19 mit den Arbeitsräumen 9;11 verbunden sind. Eine weitere Gewindeverbindung 27a zwischen dem Zylinder 7 und dem unteren Behälterrohrteil 13a sorgt für eine Verspannungsreihe zwischen dem Deckel 25, dem oberen Behälterrohrteil 13, dem Ventilblock 21 und dem unteren Behälterrohrteil 13a. Vor dem abschließenden Verschrauben der Gewindeverbindungen kann der Ventilblock in jede beliebige Lage verdreht werden, um u. U. bestehende Bauraumbeschränkungen zu umgehen. Neben der Mittenöffnung 29 steht zur Zentrierung eine Umfangsfläche 32 am Außendurchmesser des Ventilblocks zum Innendurchmesser der Behälterrohrteile zur Verfügung.

Der Ventilblock verfügt über zwei sich radial erstreckende Ventilgehäuse 35, die endseitig durch Gehäusekappen 37 verschlossen werden. Innerhalb der Ventilgehäuse sind ein erstes Ventil 39, ein zweites Ventil 41 und ein weiteres Ventil 43 installiert. Das erste Ventil 39 verfügt nur über einen kleinen Drosselquerschnitt und bildet den Voröffnungsquerschnitt für das gesamte Dämpfventil. In dem linken Ventilgehäuse 35 besteht das erste Ventil 39 aus einer Drossel 45, die von einer Kugel 47 mit einer Schließfeder 49 abgedeckt wird. Über eine Einstellschraube 51 kann die Vorspannung der Schließfeder individuell eingestellt werden. Das erste Ventil 39 liegt in Reihe mit dem weiteren Ventil 43, das ebenfalls aus einer Drossel 53 mit einem im Vergleich zur ersten Drossel 45 deutlich größeren Querschnitt ausgestattet ist. Die Drossel 53 ist Bestandteil des radial verlaufenden Kanals 33. Zur Verstellung des weiteren Ventils kommt ebenfalls eine Stellschraube 55 zur Anwendung, die durch eine Axialbewegung den Drosselquerschnitt stufenlos bestimmt.

Das zweite Ventil 41 wird von einer Ventilscheibe 57 gebildet, deren Ventilschulter 59 auf einer Ventilsitzfläche 61 des Ventilblocks 21 zur Anlage kommt. Die Ventilscheibe 57 bildet mit der Ventilsitzfläche 61 einen Anströmraum 63, in den der Dämpfmediumstrom des weiteren Ventils 43 mündet und von dem der Dämpfmediumstrom des ersten Ventil 39 abführt. Die Ventilscheibe unterliegt der Kraftbeaufschlagung durch eine Feder 65, die sich an der Gehäusekappe 37 abstützt. Die Gehäusekappe ist über ein Gewinde axial verstellbar, so daß dadurch die Kraftbeaufschlagung verändert werden kann.

Der Aufbau des zweiten und des weiteren Ventils im rechten Ventilgehäuse 35 entspricht dem bisher beschriebenen. Abweichend weist das erste Ventil 39 anstelle der federbelasteten Kugel eine Stellnadel 67 mit einer konischen Spitze auf, die über ein Gewinde innerhalb der Gehäusekappe 37 verstellbar ist, so daß sich der Querschnitt der Drossel 45 definieren läßt.

Der Schwingungsdämpfer ist nach dem Einrohr-Prinzip aufgebaut, wobei ein gasgefüllter Ausgleichsraum 69 die Volumendifferenzen des verdrängten Dämpfmediums kompensiert. Ein Trennkolben 71 trennt den Ausgleichsraum 69 vom unteren Arbeitsraum 11. Damit die untere Anschlußöffnung 17 in die Fluidenverbindung 19 nicht blockiert oder mit dem Ausgleichsraum verbunden werden kann, ist ein Anschlag 73 vorgesehen, der die Axialbewegung des Trennkolbens begrenzt.

Beim Dämpferbetrieb fährt die Kolbenstange 3 in den Zylinder 7 ein. Das verdrängte Dämpfmediumvolumen entweicht aus dem unteren Arbeitsraum 11 durch die Anschlußöffnung 17 in die Fluidenverbindung 19 über den radial verlaufende Kanal 33 in das rechte Ventilgehäuse 35. Es schließt sich das weitere Ventil 43 an, so daß das Dämpfmedium in den Anströmraum 63 gelangt. In Abhängigkeit der Einfahrgeschwindigkeit der Kolbenstange entweicht das Dämpfmedium nur über die von der Stellnadel 67 bestimmten Voröffnungsquerschnitt oder zusätzlich zwischen der Ventilsitzfläche 61 und der Ventilschulter 59, wenn die Ventilscheibe 57 abgehoben ist. Das Dämpfmedium ergießt sich in das Ventilgehäuse 35 und fließt über ein geöffnetes Rückschlagventil 75 in die Fluidenverbindung 19 ab. Das Rückschlagventil 75 sorgt für eine richtungsabhängige Durchströmung des rechten Ventilgehäuses. Bei einer Ventilanordnung mit einem ersten Ventil 39 in der Bauart wie im linken Ventilgehäuse entfällt das Rückschlagventil 75, da die federbelastete Kugel 47 ein Rückschlagventil darstellt. Die Wirkungsweise der Dämpfventilanordnung im linken Ventilgehäuse, die eine Dämpfkraft in Zugrichtung erzeugt, ist identisch mit der vorherigen Beschreibung für die Druckrichtung. Die Anwendung der beiden Anordnungstypen ist alternativ oder in Kombination zu sehen. Bei einer Kolbenstangenausfahrbewegung ist das Rückschlagventil 75 im rechten Ventil geschlossen, so daß kein Dämpfmedium über die Anschlußöffnung 15 und die Fluidenverbindung 19 in das rechte Ventil einströmen kann. In Abhängigkeit der ermittelten Fahreindrücke und/oder Dämpfkräfte wird über die Stelleinrichtungen eine Anpassung der Dämpfkraftkennlinie vorgenommen. Dabei bestimmt das erste Ventil den Kennlinieneinlauf, das zweite Ventil den mittleren Geschwindigkeitsbereich der Kennlinie, während das weitere Ventil für die Spitzengeschwindigkeiten der Kolbenstange benutzt wird, um einen progressiven Dämpfkraftkennlinienauslauf zu realisieren. In der Bauart der weiteren Ventile können auch mehrere Ventile benutzt werden.

Damit eine Fehleinstellung der Stellmittel in Richtung "Hart" der Dämpfkraftkennlinie nicht zu Schäden führt, können zusätzliche Kolbenventile 77 mit der Funktion eines Druckbegrenzungsventils zur Anwendung kommen. In der Beschreibung wurden die Stellmittel stets als einfache mechanische Bauteile beschrieben. Alternativ können natürlich auch magnetkraftbetriebene, hydraulische, elektronische oder sonstige Stellmittelantriebe verwendet werden.

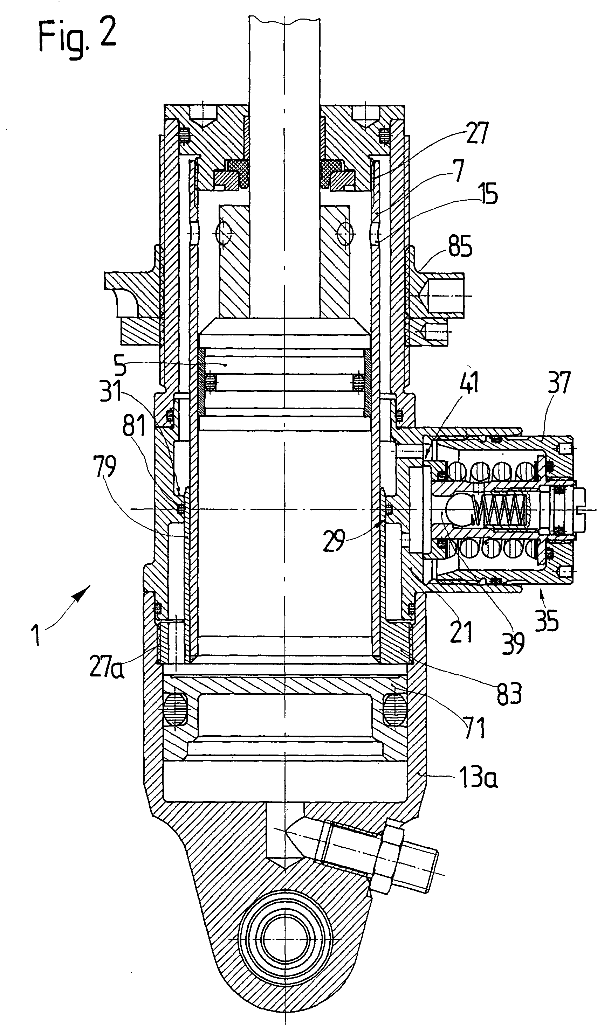

Abweichend zu Figur 1 verfügt der nicht erfindungsgemäße Schwingungsdämpfer 1 der Figur 2 über zwei von außen verstellbare Ventile 39; 41, wobei die Endkappe 37 innerhalb des Ventilgehäuses 35 verschiebbar ist. Zur Vergrößerung der druckbeaufschlagten Fläche des Trennkolbens 71 ist dieser innerhalb des Behälterrohres 13a gleitend angeordnet.

Ein weiterer Unterschied ist in der Ausgestaltung des Zylinder 7 zu erkennen. Im Bereich der Mittenöffnung 29 des Ventilblocks 21 verfügt der Zylinder über eine Erweiterung des Außendurchmessers mittels einer Hülse 79. Damit bleibt der Innendurchmesser des Zylinders 7 als Gleitbahn für den Kolben 5 erhalten. Die Außendurchmessererweiterung erlaubt eine Vergrößerung der Mittenöffnung sowie der in dem Steg 31 eingelegten Ringdichtung 81. Folglich wird die Ringdichtung 81 bei der Montage des Schwingungsdämpfers nicht über die Anschlußöffnungen 15 geschoben, so daß eine Beschädigung ausgeschlossen ist.

Die Gewindeverbindung 27a zwischen dem Zylinder 7 und dem unteren Behälterrohrteil 13a erfolgt über einen umlaufenden Befestigungsrand 83, der am Zylinder 7 angeschweißt ist. Der Befestigungsrand dient dem Trennkolben als Anschlag und ist dabei einteilig mit der Hülse 79 ausgeführt. Selbstverständlich können anstelle der Gewindeverbindungen 27; 27a auch andere Verbindungsarten vorgesehen sein.

Im Grunde wirken auf den Ventilblock 21 keine Kräfte in Umfangsrichtung. Aus Gründen des Leichtbaus verwendet man für die Behälterrohrteile bevorzugt Aluminium, wobei die größere Wärmedehnung von Aluminium im Vergleich zum Stahlzylinder den Effekt hat, daß die Teilevorspannung auf den Ventilblock währen des Dämpferbetriebs noch zunimmt. Damit steigen auch die in Umfangsrichtung aufnehmbaren Kräfte.

Ergänzend zum Schwingungsdämpfer der Figur 1 verfügt der Schwingungsdämpfer der Fig. 2 über einen in seiner Höhe verstellbaren Federteller 85, der mittels einer Sicherungsmutter fixiert wird.

## Patentansprüche

1. Schwingungsdämpfer (1) mit einstellbarer Dämpfkraft, umfassend einen Zylinder (7), in dem ein Kolben (5) mit einer Kolbenstange (3) axial beweglich geführt ist, wobei der Kolben den Zylinder in einen ersten und einen zweiten Arbeitsraum (9; 11) unterteilt, mindestens ein Dämpfventil, das in einer Strömungsverbindung zwischen den beiden Arbeitsräumen angeordnet ist und über außenliegende Stellmittel in seiner Dämpfkraftkennlinie beeinflußbar ist, wobei das Dämpfventil aus Einzelventilen (39; 41) besteht, deren Wirkung sich überlagern, wobei ein ersten Einzelventil (39) aus einer Drossel (45) geringen Querschnitts besteht und ein zweites Einzelventil (41) mindestens eine unter einer Federbelastung stehende Ventilscheibe (57) umfaßt und wobei das erste und das zweite Einzelventile über die Stellmittel (51; 67; 37) in ihrer Wirkung einzeln einstellbar sind, **dadurch gekennzeichnet, daß** mindestens ein weiteres Einzelventil (43) als ein Drosselkanal (53) größeren Querschnitts ausgeführt ist, wobei das weitere Einzelventil über Stellmittel (55) in seiner Wirkung einstellbar ist, und mit den zueinander parallel liegenden ersten und zweiten Einzelventilen in Reihe liegt.

2. Schwingungsdämpfer nach Anspruch 1, **dadurch gekennzeichnet, daß** für die Zug- und Druckrichtung hinsichtlich des zweiten Einzelventils (41) und der weiteren Einzelventile (43) jeweils getrennte Dämpfventile vorgesehen sind.

3. Schwingungsdämpfer nach Anspruch 1, **dadurch gekennzeichnet, daß** für die Zug- und Druckrichtung jeweils getrennte erste Einzelventile vorgesehen sind, die mit Rückschlagventilen (47; 75) in Wirkverbindung stehen.

4. Schwingungsdämpfer nach Anspruch 1, **dadurch gekennzeichnet, daß** die Drossel (45) des ersten Einzelventils (39) über eine Stellnadel (67) einstellbar ist.

5. Schwingungsdämpfer nach Anspruch 1, **dadurch gekennzeichnet, daß** die Drossel (45) des ersten Einzelventils (39) mit einem federbelasteten Schließkörper (47) versehen ist.

6. Schwingungsdämpfer nach Anspruch 1, **dadurch gekennzeichnet, daß** beim zweiten Einzelventil (41) die Federvorspannung mindestens einer auf die Ventilscheibe (57) wirksamen Feder (65) einstellbar ist.

7. Schwingungsdämpfer nach Anspruch 1, **dadurch gekennzeichnet, daß** das weitere Einzelventil (43) eine den Durchlaßquerschnitt des Drosselkanals (53) veränderbare Stellschraube (55) aufweist.

8. Schwingungsdämpfer nach einem der Ansprüche 1 bis 7, **dadurch gekennzeichnet, daß** der Kolben (5) über mindestens eine gedrosselte Fluidenverbindung (77) zwischen den Arbeitsräumen (9,11) verfügt.

9. Schwingungsdämpfer nach einem beliebigen der Ansprüche 1 bis 8, **dadurch gekennzeichnet, daß** der Schwingungsdämpfer (1) als ein Einrohrdämpfer aufgebaut ist, in dessen Zylinder (7) mittels eines Trennkolbens (71) ein gasgefüllter Ausgleichsraum (69) ausgeführt ist, wobei ein Anschlag (73) eine Hubbegrenzung für den Trennkolben bildet.

## Revendications

1. Amortisseur de vibrations (1) avec force d'amortissement réglable, comprenant un cylindre (7), dans lequel est guidé mobile axialement un piston (5) avec une tige de piston (3), le piston divisant le cylindre en une première et en une deuxième chambres de travail (9 ; 11), au moins une soupape d'amortissement qui est disposée dans une connexion d'écoulement entre les deux chambres de travail et dont la caractéristique de force d'amortissement peut être influencée par le biais de moyens de réglage extérieurs, la soupape d'amortissement se composant de soupapes individuelles (39 ; 41) dont les effets se superposent, une première soupape individuelle (39) se composant d'un papillon (45) de faible section transversale et une deuxième soupape individuelle (41) comprenant au moins un disque de soupape (57) sollicité par un ressort, l'action de la première et de la deuxième soupapes individuelles pouvant être réglée individuellement par le biais des moyens de réglage (51 ; 67 ; 37), **caractérisé en ce qu'**au moins une soupape individuelle supplémentaire (43) est réalisée en tant que conduit de papillon (53) de plus grande section transversale, l'action de la soupape individuelle supplémentaire pouvant être réglée par le biais de moyens de réglage (55), et cette soupape individuelle supplémentaire étant alignée avec les première et deuxième soupapes individuelles parallèles l'une à l'autre.

2. Amortisseur de vibrations selon la revendication 1, **caractérisé en ce que** des soupapes d'amortissement séparées respectives sont prévues pour la direction de traction et de poussée en ce qui concerne la deuxième soupape individuelle (41) et la soupape individuelle supplémentaire (43).

3. Amortisseur de vibrations selon la revendication 1, **caractérisé en ce que** des premières soupapes individuelles séparées respectives sont prévues pour la direction de traction et de poussée, lesquelles sont en liaison coopérante avec les soupapes anti-retour (47 ; 75).

4. Amortisseur de vibrations selon la revendication 1, **caractérisé en ce que** le papillon (45) de la première soupape individuelle (39) peut être réglé par le biais d'une aiguille de réglage (67).

5. Amortisseur de vibrations selon la revendication 1, **caractérisé en ce que** le papillon (45) de la première soupape individuelle (39) est pourvu d'un corps de fermeture (47) sollicité par ressort.

6. Amortisseur de vibrations selon la revendication 1, **caractérisé en ce que** pour la deuxième soupape individuelle (41), la précontrainte du ressort d'au moins un ressort (65) agissant sur le disque de soupape (57) est réglable.

7. Amortisseur de vibrations selon la revendication 1, **caractérisé en ce que** la soupape individuelle supplémentaire (43) présente une vis de réglage (55) pouvant modifier la section transversale de passage du conduit de papillon (53).

8. Amortisseur de vibrations selon l'une quelconque des revendications 1 à 7, **caractérisé en ce que** le piston (5) dispose d'au moins une connexion fluidique à papillon (77) entre les chambres de travail (9, 11).

9. Amortisseur de vibrations selon l'une quelconque des revendications 1 à 8, **caractérisé en ce que** l'amortisseur de vibrations (1) est construit en tant qu'amortisseur à un tube, dans le cylindre (7) duquel une chambre de compensation (69) remplie de gaz est réalisée au moyen d'un piston de séparation (71), une butée (73) formant une limitation de course pour le piston de séparation.

## Claims

1. Vibration damper (1) with adjustable damping force, comprising a cylinder (7), in which a piston (5) is guided axially movably by means of a piston rod (3), the piston subdividing the cylinder into a first and a second working space (9; 11), at least one damping valve which is arranged in a flow connection between the two working spaces and the damping-force characteristic of which can be infuenced via external actuating means, the damping valve consisting of individual valves (39; 41), the actions of which are superposed, a first individual valve (39) consisting of a throttle (45) of small cross section and a second individual valve (41) comprising at least one valve disc (57) which is under spring load, and the first and the second individual valves being individually adjustable in their action via the actuating means (51; 67; 37), **characterized in that** at least one further individual valve (43) is designed as a throttle duct (53) of larger cross section, the further individual valve being adjustable in its action via actuating means (55) and lying in series with the first and second individual valves lying parallel to one another.

2. Vibration damper according to Claim 1, **characterized in that** separate damping valves are provided in each case for the tension and compression direction with regard to the second individual valve (41) and the further individual valve (43).

3. Vibration damper according to Claim 1, **characterized in that** separate first individual valves, which are operatively connected to non-return valves (47; 75), are provided in each case for the tension and compression direction.

4. Vibration damper according to Claim 1, **characterized in that** the throttle (45) of the first individual valve (39) is adjustable via an actuating needle (67).

5. Vibration damper according to Claim 1, **characterized in that** the throttle (45) of the first individual valve (39) is provided with a spring-loaded closing body (47).

6. Vibration damper according to Claim 1, **characterized in that**, in the case of the second individual valve (41), the spring prestress of at least one spring (65) active on the valve disc (57) is adjustable.

7. Vibration damper according to Claim 1, **characterized in that** the further individual valve (43) has a setscrew (55) capable of varying the passage cross section of the throttle duct (53).

8. Vibration damper according to one of Claims 1 to 7, **characterized in that** the piston (5) has at least one throttled fluid connection (77) between the working spaces (9, 11).

9. Vibration damper according to any one of Claims 1 to 8, **characterized in that** the vibration damper (1) is constructed as a single-tube damper, in the cylinder (7) of which a gas-filled compensating space (69) is formed by means of a separating piston (71), a stop (73) forming a stroke limitation for a separating piston.
